(19) Europäisches Patentamt
European Patent Office
Office européen des brevets

(11) **EP 1 847 810 B1**

(12) **EUROPÄISCHE PATENTSCHRIFT**

(45) Veröffentlichungstag und Bekanntmachung des Hinweises auf die Patenterteilung:
**23.11.2011 Patentblatt 2011/47**

(51) Int Cl.:
***G01D 5/16*** *(2006.01)*

(21) Anmeldenummer: **06008194.0**

(22) Anmeldetag: **20.04.2006**

(54) **Verfahren und Vorrichtung zur Positionsdetektion**

Method and device for position detection

Procédé et dispositif destinés à la détection de position

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**24.10.2007 Patentblatt 2007/43**

(73) Patentinhaber: **SICK AG**
**79183 Waldkirch (DE)**

(72) Erfinder: **Baak, Josef**
**79183 Waldkirch (DE)**

(74) Vertreter: **Manitz, Finsterwald & Partner GbR**
**Martin-Greif-Strasse 1**
**80336 München (DE)**

(56) Entgegenhaltungen:
**WO-A-99/46565**     **DE-A1- 19 712 829**
**US-A- 4 490 674**     **US-A1- 2002 171 418**
**US-A1- 2004 160 220**

**Beschreibung**

Die Erfindung betrifft ein Verfahren zur Feststellung der relativen Position zweier Gegenstände, bei dem mit Hilfe eines magnetischen Elementes eines ersten Gegenstandes ein Magnetfeld erzeugt wird und mit Hilfe einer Sensoranordnung eines zweiten Gegenstandes eine erste und eine zweite Messgröße bestimmt werden, wobei die erste und die zweite Messgröße mit der Größe des Magnetfeldes in zwei unterschiedlichen Raumrichtungen korrelieren und insofern zwei unterschiedlichen Magnetfeldkomponenten entsprechen, wobei die Sensoranordnung derart gewählt ist, dass die erste Magnetfeldkomponente im Wesentlichen parallel zur relativen Bewegungsrichtung der Gegenstände ist und die zweite Magnetfeldkomponente im Wesentlichen senkrecht zur relativen Bewegungsrichtung der Gegenstände ist. Die Erfindung betrifft weiterhin einen Positionsdetektor zur Durchführung des erfindungsgemäßen Verfahrens.

Ein Verfahren und Vorrichtung dieser Art sind aus DE 197 12 829 A1 bekannt und werden beispielsweise zur Kolbenpositionsbestimmung in Pneumatikzylindern verwendet. Dazu ist am Kolben ein magnetisches Element, beispielsweise ein Ring- oder Scheibenmagnet vorgesehen, der ein Magnetfeld erzeugt, das von einem außerhalb des Zylinders vorgesehenen magnetischen Sensor erfasst wird. Der Sensor ist dabei zum Beispiel an der Außenwand des Zylinders angeordnet, dass seine Hauptempfindlichkeitsachse parallel zur Bewegungsrichtung des Kolbens liegt. Die von dem Sensor erfasste parallel zur relativen Bewegungsrichtung des Kolbens und des Zylinders ausgerichtete Magnetfeldkomponente ist maximal, wenn ein Magnet unmittelbar am Sensor vorbeigeführt wird. Bestimmung des Maximums kann zur Festlegung eines Positionserkennungssignals verwendet werden, das dann als Schaltpunkt dienen kann.

Das erzeugte Magnetfeld besitzt abhängig vom Sensorelement mehrere Extrema, die zu Fehlschaltungen führen können, wenn ein Nebenextremum als Hauptextremum fehlinterpretiert wird. Nur wenn es sich um ein Hauptextremum handelt, ist allerdings der gewünschte Schaltpunkt erreicht. Zur Überwindung dieses Problems schlägt die bekannte Lösung vor, einen zweiten Sensor zu verwenden, der hauptsächlich auf eine senkrecht zur relativen Bewegungsrichtung ausgerichtete Magnetfeldkomponente anspricht. Deren Betrag hat einen minimalen Wert, wenn der Magnet unmittelbar am Sensor vorbeigeführt wird. Zeigt der erste Sensor, der auf die Magnetfeldkomponente parallel zur Bewegungsrichtung anspricht, gerade einen maximalen Wert an, so kann durch Überprüfung, ob der zweite Sensor gerade einen minimalen Wert anzeigt, bestimmt werden, ob es sich bei dem vom ersten Sensor angezeigten Maximum um ein Hauptextremum handelt. Bei der bekannten Lösung sind dementsprechend zwei unterschiedliche Sensorsignale von zwei unterschiedlichen Sensoren auszuwerten.

EP 0726448 B 1 schlägt zur Ausblendung möglicher Nebenmaxima vor, durch zwei zusätzliche Sensoren vor und hinter dem Schaltpunkt ein Messfenster zu definieren. Es wird so angeordnet, dass nur das Hauptmaximum darin liegt. Andere Maxima, die außerhalb des Messfensters detektiert werden, werden ausgeblendet und nicht als Schaltpunkt verwendet. Bei dieser Lösung sind dementsprechend drei unterschiedliche Sensoren und deren Signale zu verwenden.

Schließlich ist es aus EP 0979988 B 1 bekannt, Sensoren zu verwenden, die zwei zueinander senkrecht stehende Feldkomponenten erfassen. Zur relativen Lageerkennung wird der Quotient der zwei Signale ausgewertet.

DE 10 2004 060249 A1 beschreibt einen Sensor für eine andere Anwendung, mit dessen Hilfe die Richtung eines Magnetfeldes festgestellt wird. Der Sensor weist eine ebene weichmagnetische Struktur mit mindestens einem ersten und einem zweiten Bereich auf, die durch einen ersten und einen zweiten langen Spalt voneinander getrennt sind, wobei der erste und der zweite lange Spalt nicht parallel zueinander ausgerichtet sind. Ein erstes und ein zweites magnetoresistives Element sind entlang des ersten und des zweiten Spaltes angeordnet und so beschaffen, dass sie mit einer Stromquelle und einer elektrischen Messeinheit elektrisch verbunden werden können. Die weichmagnetischen Strukturen dienen als Magnetflussführungen, um die erfassbaren Magnetflusswerte zu konzentrieren und zu verstärken. Grundsätzlich wird nur die senkrecht zur Längsrichtung eines Spaltes zeigende Komponente eines angelegten äußeren Magnetfeldvektors durch die Magnetflussführungen merklich verstärkt. Aus den Widerstandssignalen der in den Spalten angeordneten magnetoresistiven Elemente wird in DE 10 2004 060 249 A1 auf die Magnetfeldrichtung zurückgeschlossen.

US 2004/0160220 A1 offenbart eine Vorrichtung zum Bestimmen der Winkelposition eines Objekts mittels planarer, magnetoresistiver Sensoren. Zur Erfassung der Magnetfeldvektoren, die von einer exzentrisch zu einer Drehachse angeordneten rotationssymmetrischen Magnetanordnung erzeugt werden, werden zwei magnetoresistive Sensoren verwendet, die in einer Ebene senkrecht zueinander angeordnet sind.

Aus US 4,490,674 ist ein weiterer Drehwinkelsensor bekannt, bei dem Sensorelemente mit jeweils vier magnetoresistiven Elementen zum Einsatz kommen. Die magnetoresistiven Elemente sind gemäß einer Brückenschaltung zur Bestimmung einer Differenzspannung verschaltet.

US 2002/0171418 A1 zeigt eine Anordnung zur Positions-, Winkel- oder Drehzahlbestimmung mittels einer Sensoranordnung, welche zwei Halbbrücken umfasst, bei der zur Auswertung eine Magnetfelddifferenz zwischen zwei voneinander beabstandeten Halbbrücken erfasst wird.

WO 99/46565 betrifft eine Vorrichtung zum Messen einer Winkelposition mittels magnetoresistiver Sensoren, die in Form von Brückenschaltungen angeordnet sind.

Es ist die Aufgabe der vorliegenden Erfindung, ein Verfahren und eine Vorrichtung anzugeben, die einfach im Aufbau und leicht auszuwerten sind, um die relative Position zweier Gegenstände zu bestimmen, insbesondere einen Schaltpunkt bei der relativen Bewegung festzulegen.

Diese Aufgabe wird mit einem Verfahren mit den Merkmalen des Anspruches 1 und eine Vorrichtung mit den Merkmalen des Anspruches 14 gelöst. Unteransprüche sind auf bevorzugte Ausgestaltungen gerichtet.

Bei dem erfindungsgemäßen Verfahren wird ein Differenzsignal der Absolutbeträge der ersten und der zweiten Messgröße verwendet um die relative Position des ersten und des zweiten Gegenstandes zu bestimmen.

Abhängig von der relativen Position eines Gegenstandes mit einem magnetfelderzeugenden Element und einem Gegenstand mit einer Sensoranordnung ändern sich die Magnetfeldkomponenten, die an der Sensoranordnung gemessen werden können. Die Differenz der Beträge zweier Magnetfeldkomponenten in unterschiedlichen Richtungen kann daher zur Feststellung der relativen Position der zwei Gegenstände verwendet werden. Dazu wird die Sensoranordnung so ausgestaltet, dass sie wenigstens zwei unterschiedliche Hauptempfindlichkeitsrichtungen hat, das heißt, zwei unterschiedliche Magnetfeldkomponenten messen kann. Erfindungsgemäß wird die Differenz der Beträge dieser Komponenten bzw. der Beträge der zugehörigen Messsignale zur Bestimmung der relativen Position verwendet.

Insbesondere ist das erfindungsgemäße Verfahren geeignet, um einen Zeitpunkt zu bestimmen, an dem der erste und der zweite Gegenstand eine vorbestimmte relative Position zueinander haben, zum Beispiel um einen Schaltpunkt festzulegen. Auf einfache Weise lässt sich dies erreichen, indem zum Beispiel ein Extremum des Differenzsignals ausgewertet wird, insbesondere zum Beispiel ein Maximum.

Um die voneinander zu subtrahierenden Größen derart anzupassen, dass Nebenextrema möglichst effektiv unterdrückt werden, können die Messgrößen insbesondere unterschiedlich stark verstärkt werden.

Insbesondere wenn der Absolutbetrag der einen Messgröße vom Absolutbetrag der anderen Messgröße abgezogen wird, um Nebenmaxima bei der Messung der ersten Messgröße auszublenden, kann auf diese Weise eine optimale Anpassung derart vorgenommen werden, dass die Nebenmaxima in ausreichendem Maße durch die Differenzbildung verringert werden.

Ein besonders leicht auszuwertendes Signal ergibt sich, wenn die Messgrößen derart gewählt werden, dass eine erste Messgröße zu einer Magnetfeldkomponente korreliert, die parallel zur Bewegungsrichtung der relativen Bewegung ist, und eine zweite Messgröße zu einer Magnetfeldkomponente korreliert, die senkrecht zur relativen Bewegungsrichtung ist.

Damit mögliche Nebenmaxima in dem Signal, das der Magnetfeldkomponente parallel zur Bewegungsrichtung entspricht, möglichst effektiv ausgeblendet werden können, ist es vorteilhaft, wenn die Messgröße, die der Magnetfeldkomponente senkrecht zur Bewegungsrichtung entspricht, stärker als die andere Messgröße verstärkt wird.

Das magnetfelderzeugende Element wird vorteilhafterweise so gewählt, dass bei relativer Bewegung der Gegenstände zu einem Zeitpunkt, wenn das magnetfelderzeugende Element am nächsten an der Sensoranordnung ist, die gemessene Magnetfeldkomponente parallel zur Bewegungsrichtung ihren größten Betrag hat, während die andere Magnetfeldkomponente senkrecht dazu gleich Null ist.

Die Sensoranordnung kann Hall-Elemente umfassen, deren Messsignale zur Differenzbildung verwendet werden. Dabei werden Hall-Elemente eingesetzt, die derart in der Sensoranordnung angeordnet sind, dass sich ihre Messsignale bei einer relativen Bewegung der Gegenstände zueinander unterschiedlich ändern.

Bei einer anderen Ausgestaltung werden zur Ermittlung der Messgrößen Widerstandswerte wenigstens zweier magnetoresistiver Elemente eingesetzt, die derart in der Sensoranordnung angeordnet sind, dass sich ihre Widerstandswerte bei einer relativen Bewegung der Gegenstände zueinander unterschiedlich ändern. Widerstandswerte lassen sich leicht auslesen und einfach weiterverarbeiten.

Bei einer möglichen Verfahrensführung werden die Signale der magnetoresistiven Elemente zunächst verwendet, um die Größe der Magnetfeldkomponenten in den unterschiedlichen Raumrichtungen zu bestimmen. Es wird dann die Differenz der Absolutbeträge dieser Magnetfeldkomponenten gebildet, um das erfindungsgemäße Differenzsignal zu erzeugen, aus dem die relative Position bestimmt werden kann.

Eine einfachere Ausgestaltung sieht vor, dass die Signale der magnetoresistiven Elemente direkt verwendet werden, um das Differenzsignal zu bilden. Je nach Messgeometrie werden dazu die in der Sensoranordnung gemessenen Widerstände oder die Spannungswerte, die über den Widerständen abgegriffen werden, nach Bildung der Absolutbeträge voneinander subtrahiert. Eine explizite Bestimmung der Magnetfeldkomponenten erübrigt sich dann.

Entsprechende Verfahrensführungen sind auch bei Einsatz von Hallelementen möglich.

Eine besonders vorteilhafte Ausgestaltung des erfindungsgemäßen Verfahrens sieht vor, dass wenigstens vier magnetoresistive Elemente eingesetzt werden, die nach Art einer Brückenschaltung miteinander verschaltet sind. Wenn zum Beispiel in jedem Zweig der Brückenschaltung jeweils zwei magnetoresistive Elemente in Serie geschaltet sind, die derart angeordnet sind, dass sich ihre Widerstandswerte bei der relativen Bewegung des ersten Gegenstandes und des zweiten Gegenstandes unterschiedlich ändern, so lässt sich bei geschickter Wahl der Spannungsabgriffe in der Brücke direkt das erfindungsgemäß zu verwendende Differenzsignal bestimmen.

Der magnetische Fluss, der durch das magnetische Element an den ersten Gegenstand erzeugt wird, kann am Ort der magnetoresistiven Elemente der Sensoranordnung des zweiten Gegenstandes durch feldbeeinflussende Elemente, die vorzugsweise aus weichmagnetischem Material gefertigt sind, verstärkt werden. Die Magnetfeldkomponenten, die von den magnetoresistiven Elementen detektiert werden, werden so bereits durch den Messaufbau verstärkt.

Die Verwendung von solchen feldbeeinflussenden Magnetflussführungen ist besonders vorteilhaft bei Verwendung von magnetoresistiven Elementen in der Sensoranordnung. Ihre Verwendung ist aber auch bei anderen Messelementen wie zum Beispiel Hallelementen denkbar.

Besonders vorteilhaft lässt sich das erfindungsgemäße Verfahren anwenden, um die relative Position eines Zylinders, zum Beispiel eines Pneumatikzylinders, und eines darin laufenden Kolbens festzustellen. Dabei ist es besonders einfach, wenn der Kolben mit dem magnetfelderzeugenden magnetischen Element ausgestattet ist und der Zylinder zum Beispiel an seiner Außenwand die Sensoranordnung trägt.

Ein erfindungsgemäßer Positionsdetektor dient zur Durchführung eines erfindungsgemäßen Verfahrens und weist insbesondere eine Auswerteschaltung auf, die zumindest einen ersten Teil aufweist, der zur Bildung eines Differenzsignals der Absolutbeträge der ersten und der zweiten Messgröße dient.

Zur automatischen Auswertung kann vorgesehen sein, dass die Auswerteschaltung einen zweiten Teil zur Bestimmung der relativen Position des ersten und des zweiten Gegenstandes aus dem Differenzsignal umfasst. Zum Beispiel kann dazu ausgewertet werden, wann das Differenzsignal ein Maximum zeigt, wenn der erste und der zweite Gegenstand relativ zueinander bewegt werden. Die Feststellung dieses Maximums kann vorteilhafterweise eingesetzt werden, um einen Schaltpunkt festzulegen.

Eine besonders bevorzugte Ausführungsform des erfindungsgemäßen Positionsdetektors weist wenigstens vier magnetoresistive Elemente auf, die in einer Brückenschaltung miteinander verschaltet sind. Dabei können die magnetoresistiven Elemente so gewählt sein, dass sie im magnetfeldfreien Fall gleiche Widerstandswerte aufweisen und in jedem Zweig der Brückenschaltung jeweils zwei magnetoresistive Elemente in Serie geschaltet sind, die derart angeordnet sind, dass sich ihre Widerstandswerte bei der relativen Bewegung des ersten Gegenstandes und des zweiten Gegenstandes unterschiedlich ändern. Das zwischen den jeweiligen Mittelpositionen der Brückenschaltung gemessene Spannungssignal entspricht dem erfindungsgemäß verwendeten Differenzsignal, so dass die Brückenschaltung vom ersten Teil der Auswerteschaltung umfasst ist.

Feldbeeinflussende Elemente können vorgesehen sein, die vorzugsweise aus weichmagnetischen Material bestehen und zur Verstärkung der Messgrößen dienen. Die feldbeeinflussenden Elemente werden so angeordnet, dass sie den magnetischen Fluss an dem Ort der magnetoresistiven Elemente verstärken.

Die Sensoranordnung kann individuelle Sensoren zur Messung der einzelnen Magnetfeldkomponenten in den unterschiedlichen Richtungen aufweisen, die nicht notwendigerweise am gleichen Platz angeordnet sind. Besonders vorteilhaft ist jedoch eine Anordnung, bei der alle Elemente der Sensoranordnung und die ggf. vorhandenen feldbeeinflussenden Elemente nahe beieinander, insbesondere auf einem Chip angeordnet sind. Dies gewährleistet eine kompakte Bauform und eine sichere Messung.

Andere vorteilhafte Ausführungsformen des erfindungsgemäßen Positionsdetektors und daraus resultierende Vorteile und Wirkungsweisen ergeben sich aus der obigen Schilderung der Ausgestaltungen des erfindungsgemäßen Verfahrens.

Mit der Erfindung wird insbesondere der Entwicklungs- und Prüfaufwand vermieden, der bei Lösungen des Standes der Technik notwendig war, um zum Beispiel einen Schaltpunkt für eine bestimmte Zylinderbaureihe anzupassen. Die Unterdrückung der Nebenmaxima des Betrages des einen Messsignals durch Subtraktion des Betrages eines anderen Messsignals derselben Sensoranordnung ist unabhängig von der individuellen Anwendung.

Zum Beispiel bei der Verwendung als Positionsdetektor in einer Zylinder-Kolbenanordnung zur Festlegung eines Schaltpunktes schaltet die Sensoranordnung auf verschiedenen Zylindertypen eindeutig.

Die Erfindung wird anhand der beiliegenden Figuren im Detail erläutert. Die Figuren zeigen in schematischer Darstellung eine Ausführungsform einer erfindungsgemäßen Vorrichtung und eine Ausgestaltung eines erfindungsgemäßen Verfahrens. Dabei zeigen

Fig. 1      einen schematischen Querschnitt durch eine Zylinder-Kolbenanordnung mit einer erfindungsgemäßen Anordnung,

Fig. 2      die Draufsicht auf einen erfindungsgemäß verwendeten Sensor,

Fig. 3      ein Ersatzschaltbild der in Fig. 2 gezeigten Anordnung,

Fig. 4a      magnetische Feldkomponenten des Ringmagneten in unterschiedlichen Raumrichtungen,

Fig. 4b      die Beträge der Feldkomponenten aus Fig. 4a, und

Fig. 4c      ein Messsignal einer erfindungsgemäßen Anordnung.

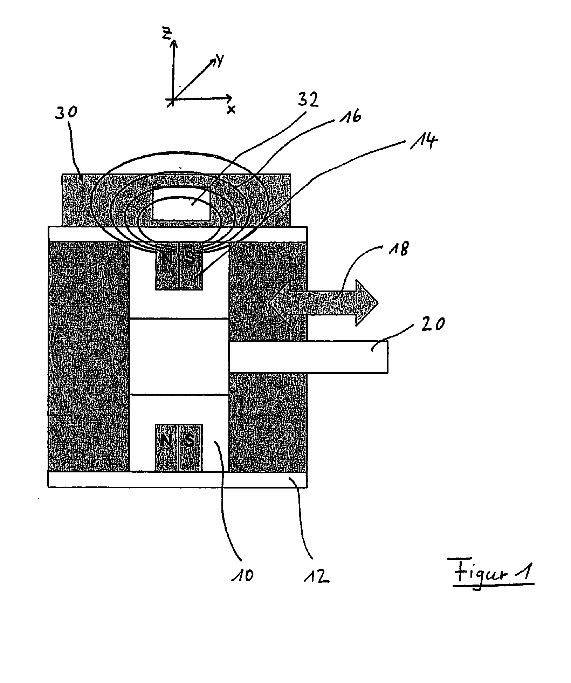

In Fig. 1 ist schematisch eine erfindungsgemäße Vorrichtung gezeigt. Ein Kolben 10 mit einer Kolbenstange 20 bewegt sich in einem Zylinder 12, zum Beispiel einem Pneumatikzylinder. In einer am Umfang des Kolbens 10 angeordneten Nut ist ein Ringmagnet 14 gelagert, dessen Nord- und Südpol wie angegeben angeordnet sind. Beispielhaft ist an einer Stelle der Feldlinienverlauf der Feldlinien 16 gezeigt, wie er im Randbereich des Kolbens bzw. des Zylinders 12 vorliegt. Der Zylinder bewegt sich in der Pfeilrichtung 18 hin und her.

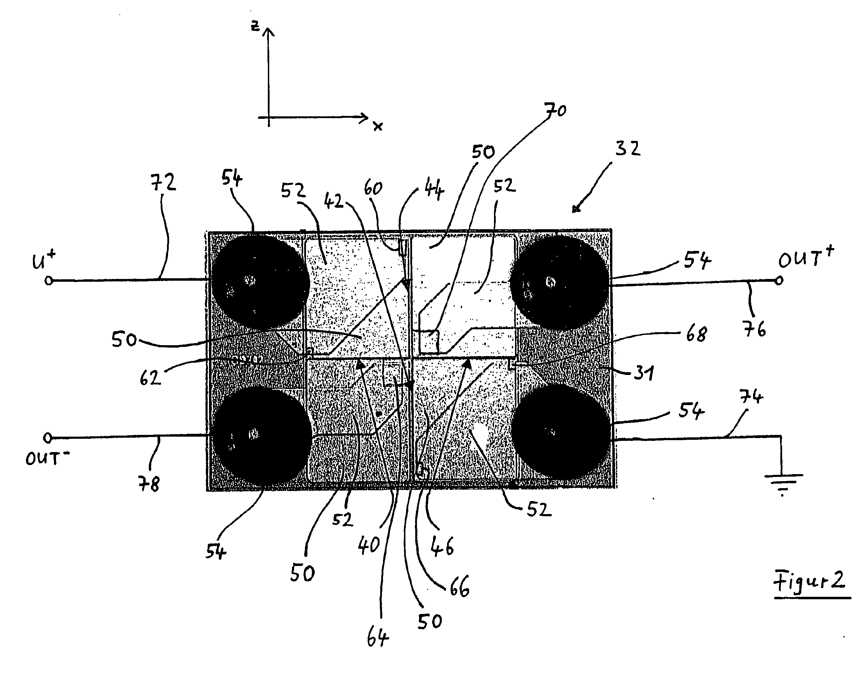

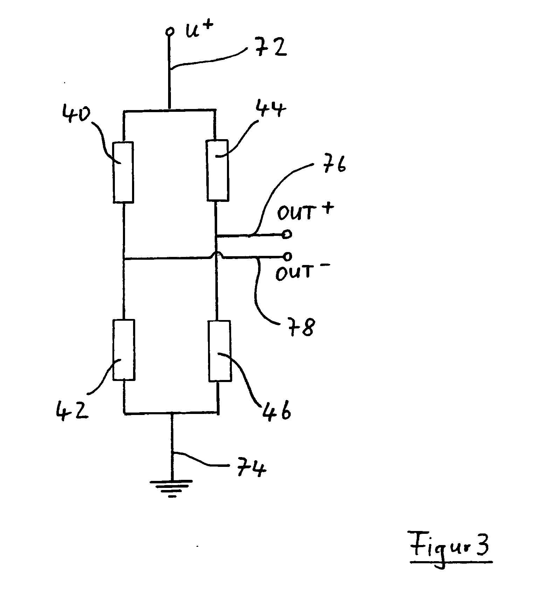

Am Außenumfang des Zylinders 12 ist ein Sensorelement 32 auf einer Leiterplatte 30 angeordnet. Es dient zum Auswerten der Magnetfeldkomponenten, die sich durch die Feldlinien 16 ergeben. Der Aufbau des Sensorelementes 32 wird mit Bezug zu den Fig. 2 und 3 im Detail erläutert werden. Zu Erläuterungszwecken ist noch ein kartesisches Koordinatensystem mit den Achsen x, y und z angegeben. Entsprechend der Geometrie der gezeigten Anordnung entspricht die x-Richtung der axialen Richtung und die z-Richtung der radialen Richtung in Bezug auf den Zylinder 12 bzw. den darin laufenden Kolben 10.

Fig. 2 zeigt die Draufsicht auf ein Sensorelement. Auf dem Chip 31 sind alle Elemente des Sensors angeordnet. Der Chip 31 selbst ist auf der Leiterplatte 30 angeordnet, die in Fig. 1 gezeigt ist. Auch in Fig. 2 sind die axiale Richtung x und die radiale Richtung z angedeutet. Der Chip 31 ist dementsprechend derart angeordnet, dass er sich auf einer radialen Ebene befindet, die sich von der Zylinderachse 12 radial nach außen erstreckt.

Das Sensorelement 32 ist ähnlich aufgebaut, wie Sensorelemente, die zur Messung der Magnetfeldrichtung verwendet werden, wie sie in DE 10 2004 060249 A1 beschrieben sind. Radiale Sensorstreifen 40 und 46 und axiale Sensorstreifen 42 und 44 sind aus Material gefertigt, das zum Beispiel einen AMR-Effekt (anisotropic magnetoresistance effect) oder einen GMR-Effekt (giant magnetoresistance effect) zeigt. Sie sind über Elektroden 52 mit sogenannten Bumps (z.B. Lötzinn) 54 kontaktierbar. Über elektrische Kontakte 60, 70 wird der axiale Sensorstreifen 44 kontaktiert, während der radiale Sensorstreifen 46 über Kontakte 70 und 68 kontaktiert wird. Kontakte 66 und 64 dienen der Kontaktierung des anderen axialen Sensorstreifens 42, während der andere radiale Sensorstreifen 40 über Kontakte 62 und 64 kontaktiert werden kann. Die Elemente 50 umfassen weichmagnetische Bereiche, die als Magnetflussführungen wirken. Zwischen den Magnetflussführungen 50 befinden sich Spalte, in denen die Sensorstreifen 40, 42, 44, 46 wie angedeutet angeordnet sind. Je nach Geometrie und Anordnung der Magnetflussführungen wird das Magnetfeld zwischen den weichmagnetischen Bereichen, d.h. im Innern dieser Spalte, verstärkt. Dabei werden nur diejenigen Komponenten des Magnetfeldes merklich verstärkt, welche senkrecht zur Längsrichtung des jeweiligen Spaltes ausgerichtet sind. Die Anordnung ist so gewählt, dass die Sensorstreifen 42, 44 nur die axialen Komponenten in x-Richtung eines von außen wirkenden Magnetfeldes erfassen und die magnetoresistiven Sensorstreifen 40, 46 nur die radialen Komponenten in z-Richtung eines von außen anliegenden magnetischen Feldes.

Aufgrund der magnetoresistiven Eigenschaften der Sensorstreifen 40, 42, 44, 46 ändert sich beim Anlegen eines Magnetfeldes ihr Widerstand. Die unterschiedliche Anordnung der magnetoresistiven Sensorstreifen, insbesondere in den Spalten zwischen den Magnetflussführungen 50, in einem von außen anliegenden Magnetfeld bewirkt dabei eine unterschiedliche Änderung des elektrischen Widerstandes der einzelnen Sensorelemente.

Es wird deutlich, dass die Sensorstreifen 40, 42, 44, 46 nach Art einer Wheatstone-Brücke miteinander verschaltet sind.

Fig. 3 zeigt ein entsprechendes Ersatzschaltbild. Wird an den Anschluss 72 eine Spannung U+ gegenüber Erde (Anschluss 74) angelegt, so fließt ein Strom durch die Brückenschaltung. Zwischen den Anschlüssen 76, 78 kann die Messspannung OUT+ zu OUT- abgegriffen werden.

Die Spannungsdifferenz zwischen den Anschlüssen OUT+ und OUT- entspricht der Differenz zwischen den Beträgen der axialen und der radialen Feldkomponente.

Die erfindungsgemäße Vorrichtung wird wie folgt eingesetzt. Der Kolben 10 bewegt sich in dem Zylinder 12 hin und her. Die Magnetfeldlinien 16 bewegen sich zusammen mit dem Ringmagneten 14. Am Ort des Sensorelementes 32 variieren dementsprechend die axiale und radiale Magnetfeldkomponente.

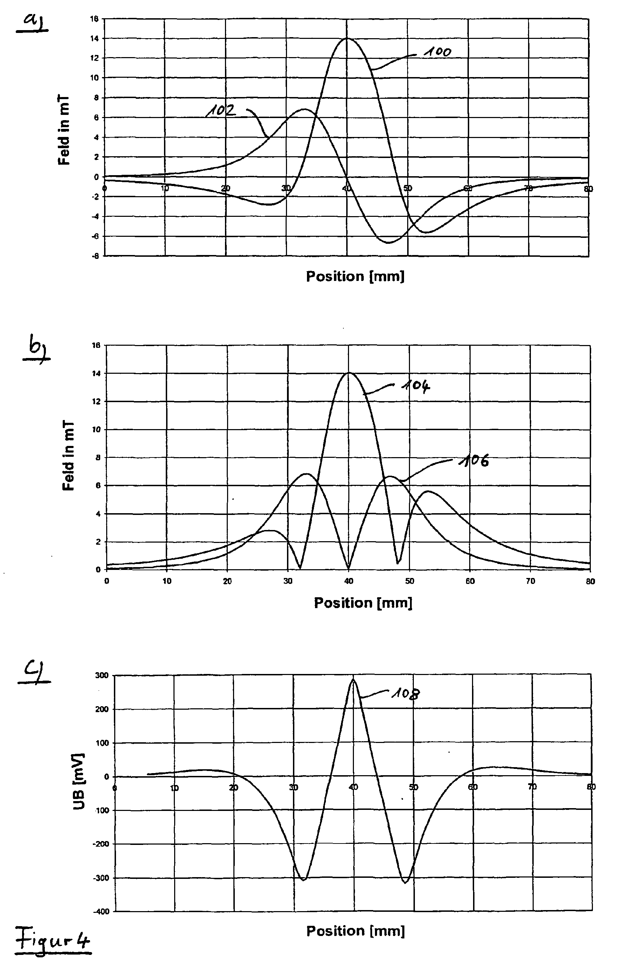

Fig. 4a zeigt die durch den Ringmagneten 14 am Ort des Sensorelementes 32 generierte magnetische Flussdichte in Abhängigkeit der Kolbenposition. Während 100 das axiale Feld bezeichnet, bezeichnet 102 die radiale Feldkomponente. In dem dargestellten Beispiel haben das Sensorelement 32 und der Ringmagnet 14 bei der Kolbenposition "40 mm" ihre größte Annäherung zueinander.

Daraus ergeben sich die Absolutbeträge der einzelnen Feldkomponenten in Fig. 4b. Der Betrag der axialen Feldkomponente ist in Fig. 4b mit 104 bezeichnet, während der Betrag der radialen Feldkomponente in Fig. 4b mit 106 bezeichnet ist.

Fig. 4c zeigt den Spannungsverlauf $U_B$, der zwischen den Anschlüssen OUT+ und OUT- der Brückenschaltung abgegriffen werden kann. Der Verlauf in Abhängigkeit der Kolbenposition ist mit 108 bezeichnet.

Die Kurve 108 zeigt neben dem prominenten Hauptmaximum nur kleine vernachlässigbare weitere positive Maxima. Das Hauptmaximum lässt sich zum Beispiel mit einer Schwellwertschaltung dementsprechend gut und sicher detektieren.

Das gemessene Signal entspricht folgender Formel:

$$S = a \cdot |B_{ax}| - b \cdot |B_{rad}|.$$

Dabei ist $B_{ax}$ die axiale Komponente des Magnetfeldes und $B_{rad}$ die radiale Komponente des Magnetfeldes. a und b sind Verstärkungsfaktoren. Es hat sich als vorteilhaft erwiesen, wenn der Verstärkungsfaktor b für die radiale Komponente größer ist als der Verstärkungsfaktor a für die axiale Komponente.

Die Verstärkung der Magnetfeldkomponenten erfolgt vorteilhafterweise über feldbeeinflussende Elemente aus weichmagnetischem Material. Bei der gezeigten bevorzugten Ausführungsform, bei der solche Magnetflussführungen verwendet werden, werden die Verstärkungsfaktoren durch die Geometrie und die Materialauswahl dieser Magnetflussführungen bestimmt. Bei anderen Ausführungen, die andere Geometrien verwenden, werden die Verstärkungsfaktoren zum Beispiel elektronisch festgelegt.

Bei der beschriebenen bevorzugten Ausführungsform sind vier einzelne magnetoresistive Elemente zu einer Wheatstone-Brücke zusammengeschaltet, wobei sich in jedem Brückenzweig ein Sensorelement für die Erfassung der axialen und ein Sensorelement zur Erfassung der radialen Feldkomponente befindet. Eine solche Anordnung ermöglicht auf einfache Weise durch den Spannungsabgriff zwischen den Anschlüssen OUT+ und OUT- die Differenzbildung zur Auswertung. Insbesondere ist zur Differenzbildung keine zusätzliche Auswerteelektronik notwendig.

Es sind jedoch auch andere Ausführungsformen möglich, bei denen magnetoresistive Elemente zur Bestimmung der axialen Feldkomponente und andere magnetoresistive Elemente zur Bestimmung der radialen Feldkomponente vorgesehen sind und wobei die Differenz zum Beispiel mit Hilfe eines Mikroprozessors elektronisch bestimmt wird.

Wieder andere Ausgestaltungen sehen Hall-Elemente zur Bestimmung der einzelnen Feldkomponenten vor.

Zum Beispiel mit der beschriebenen bevorzugten Anordnung in der Form einer Wheatstone-Brücke werden die axiale und die radiale Feldkomponente an einem Ort gemessen. Bei anderen Ausgestaltungen werden die axiale und die radiale Feldkomponente räumlich getrennt gemessen. Dann wird vorzugsweise die radiale Feldkomponente näher am Gebermagneten gemessen, um für die radiale Komponente ein größeres Signal zu bekommen, wodurch die Unterdrückung möglicher Nebenmaxima in der axialen Komponente verbessert wird.

Die magnetoresistiven Elemente bzw. die Hall-Elemente und die feldbeeinflussenden Elemente können zum Beispiel in Dünnfilmtechnologie auf einem einzelnen Chip angeordnet sein und sind daher einfach und kostengünstig herstellbar und verwendbar.

Wie sich insbesondere aus Fig. 4c ergibt, verbessert die Verwendung des Differenzsignals die Temperaturdrift des Sensors, da das Sensorsignal selbst ein steilere Flanke besitzt als das bei früheren Sensoranordnungen direkt verwendete axiale Feldkomponentensignal.

Mit der Erfindung wird der Entwicklungs- und Prüfaufwand vermieden, der bei Lösungen des Standes der Technik notwendig war, um den Schaltpunkt zum Beispiel für eine bestimmte Zylinderbaureihe anzupassen und Nebenmaxima der gemessenen Magnetfeldkomponente auszublenden. Der Sensor kann mit allen gängigen Zylindertypen verwendet werden, um einen eindeutigen Schaltpunkt festzulegen.

Eine einmal für eine Zylinder-Kolbenanordnung zum Beispiel durch geeignete Auswahl der Verstärkungsfaktoren a, b der Messgrößen eingestellte Sensoranordnung kann ohne neuerliche Einstellung auch für andere Anordnungen eingesetzt werden.

Der erfindungsgemäße Positionsdetektor ist besonders gut geeignet um einen eindeutigen Schaltpunkt festzulegen. Das Differenzsignal gegebenenfalls verstärkter Beträge der Messsignale wird ausgewertet um zum Beispiel einen Schaltpunkt am Maximum festzulegen.

Der Positionsdetektor kann zum Beispiel als Zylindersensor in Pneumatikzylindern eingesetzt werden. Eine andere Anwendung sieht die Verwendung für einen magnetischen Näherungssensor zur Detektion eines in Längs- oder Querrichtung sich bewegenden Gebermagneten vor.

Bezugszeichenliste

| | |
|---|---|
| 10 | Kolben |
| 12 | Zylinder |
| 14 | Ringmagnet |
| 16 | Feldlinien |
| 18 | Zylinderbewegung |
| 20 | Kolbenstange |
| 30 | Leiterplatte |
| 31 | Chip |

| 32 | Sensorelement |
|---|---|
| 40 | radialer Sensorstreifen |
| 42 | axialer Sensorstreifen |
| 44 | axialer Sensorstreifen |
| 46 | radialer Sensorstreifen |
| 50 | Magnetflussführung |
| 52 | Elektrode |
| 54 | Lötzinn |
| 60, 62, 64, 66, 68, 70 | elektrische Kontakte |
| 72, 74, 76, 78 | elektrische Anschlüsse |
| 100 | axiale Feldkomponente |
| 102 | radiale Feldkomponente |
| 104 | Absolutbetrag der axialen Feldkomponente |
| 106 | Absolutbetrag der radialen Feldkomponente |
| 108 | Differenzsignal |

**Patentansprüche**

1. Verfahren zur Feststellung der relativen Position zweier relativ zueinander bewegter Gegenstände, bei dem

- mit Hilfe eines magnetischen Elementes eines ersten Gegenstandes ein Magnetfeld erzeugt wird und
- mit Hilfe einer Sensoranordnung eines zweiten Gegenstandes eine erste und eine zweite Messgröße bestimmt werden, wobei die erste und die zweite Messgröße mit der Größe des Magnetfeldes in zwei unterschiedlichen Raumrichtungen korrelieren und insofern zwei unterschiedlichen Magnetfeldkomponenten entsprechen, wobei die Sensoranordnung derart gewählt ist, dass die erste Magnetfeldkomponente im Wesentlichen parallel zur relativen Bewegungsrichtung der Gegenstände ist und die zweite Magnetfeldkomponente im Wesentlichen senkrecht zur relativen Bewegungsrichtung der Gegenstände ist,

**dadurch gekennzeichnet, dass**
bei der Bestimmung der relativen Position des ersten und des zweiten Gegenstandes (10, 12) ein Differenzsignal (108) der Absolutbeträge der ersten und der zweiten Messgröße (100, 102) verwendet wird.

2. Verfahren nach Anspruch 1,
**dadurch gekennzeichnet, dass**
aus dem Differenzsignal (108) ein Zeitpunkt bestimmt wird, an dem der erste und der zweite Gegenstand (10, 12) eine vorbestimmte relative Position zueinander haben, vorzugsweise um einen Schaltpunkt festzulegen.

3. Verfahren nach Anspruch 2,
**dadurch gekennzeichnet, dass**
zur Bestimmung des Zeitpunktes die Lage eines Extremums des Differenzsignals (108) verwendet wird.

4. Verfahren nach einem der Ansprüche 1 bis 3,
**dadurch gekennzeichnet, dass**
die erste und die zweite Messgröße vor der Differenzbildung verstärkt werden, vorzugsweise unterschiedlich stark.

5. Verfahren nach Anspruch 4,
**dadurch gekennzeichnet, dass**
die Messgröße, die der zur Bewegungsrichtung im Wesentlichen senkrechten Magnetfeldkomponente entspricht, stärker verstärkt wird, als die Messgröße, die der zur Bewegungsrichtung im Wesentlichen parallelen Magnetfeldkomponente entspricht.

6. Verfahren nach einem der Ansprüche 1 bis 5,
**dadurch gekennzeichnet, dass**
als Messgrößen Messsignale wenigstens zweier Hallelemente eingesetzt werden, die derart in der Sensoranordnung angeordnet sind, dass sich ihre Messsignale bei einer relativen Bewegung der Gegenstände zueinander unterschiedlich ändern.

**7.** Verfahren nach einem der Ansprüche 1 bis 5,
**dadurch gekennzeichnet, dass**
zur Ermittlung der Messgrößen Widerstandswerte wenigstens zweier magnetoresistiver Elemente eingesetzt werden, die derart in der Sensoranordnung angeordnet sind, dass sich ihre Widerstandswerte bei einer relativen Bewegung der Gegenstände zueinander unterschiedlich ändern.

**8.** Verfahren nach Anspruch 7,
**dadurch gekennzeichnet, dass**
die Signale der magnetoresistiven Elemente zur Bestimmung der ersten und der zweiten Magnetfeldkomponente verwendet werden und zur Differenzbildung die Absolutbeträge der ersten und der zweiten Magnetfeldkomponente eingesetzt werden.

**9.** Verfahren nach Anspruch 7,
**dadurch gekennzeichnet, dass**
die Absolutbeträge der Signale der magnetoresistiven Elemente zur Differenzbildung verwendet werden.

**10.** Verfahren nach Anspruch 7,
**dadurch gekennzeichnet, dass**
wenigstens vier magnetoresistive Elemente (40, 42, 44, 46) verwendet werden, die derart in Form einer Brückenschaltung miteinander verschaltet sind und in der Sensoranordnung (32) derart zueinander angeordnet sind, dass das von der Brückenschaltung entnommene Signal der Differenz des Betrages einer ersten, der ersten Magnetfeldkomponente entsprechenden, Messgröße und des Betrages einer zweiten, der zweiten Magnetfeldkomponente entsprechenden, Messgröße entspricht, und dieses Differenzsignal (108) zur Bestimmung der relativen Position des ersten und des zweiten Gegenstandes (10, 12) verwendet wird.

**11.** Verfahren nach einem der Ansprüche 7 bis 10,
**dadurch gekennzeichnet, dass** der magnetische Fluss mit Hilfe von feldbeeinflussenden Elementen (50), vorzugsweise aus weichmagnetischem Material, bei den magnetoresistiven Elementen (40, 42, 44, 46) verstärkt wird.

**12.** Verfahren nach einem der Ansprüche 1 bis 11,
**dadurch gekennzeichnet, dass**
der erste und der zweite Gegenstand einen Zylinder (10) und einen Kolben (12) umfassen.

**13.** Verfahren nach Anspruch 12,
**dadurch gekennzeichnet, dass**
der Kolben (10) mit dem magnetfelderzeugenden magnetischen Element (14) ausgestattet ist und der Zylinder (12) mit der Sensoranordnung (32).

**14.** Positionsdetektor zur Feststellung der relativen Position zweier relativ zueinander bewegter Gegenstände zur Durchführung eines Verfahrens nach Anspruch 1, mit

- einem an einem ersten Gegenstand vorgesehenen, magnetfelderzeugenden magnetischen Element und
- einer an einem zweiten Gegenstand vorgesehenen Sensoranordnung zur Bestimmung einer ersten und einer zweiten Messgröße, wobei die erste und die zweite Messgröße mit der Größe des Magnetfeldes in zwei unterschiedlichen Raumrichtungen korrelieren und insofern zwei unterschiedlichen Magnetfeldkomponenten entsprechen, und

wobei die Sensoranordnung (32) so angeordnet ist, das die erste Magnetfeldkomponente im wesentlichen parallel zur relativen Bewegungsrichtung (18) ist und die zweite Magnetfeldkomponente im wesentlichen senkrecht zur relativen Bewegungsrichtung (18) ist,
**gekennzeichnet durch**
eine Auswerteschaltun mit einem ersten Teil zur Bildung eines Differenzsignals (108) der Absolutbetrage der ersten und der zweiten Messgröße (100, 102).

**15.** Positionsdetektor nach Anspruch 14,
**dadurch gekennzeichnet, dass**
die Auswerteschaltung einen zweiten Teil zur Bestimmung einer relativen Position des ersten und des zweiten Gegenstandes (10, 12) aus dem Differenzsignal (108) umfasst.

**16.** Positionsdetektor nach Anspruch 15,
**dadurch gekennzeichnet, dass**
der zweite Teil der Auswerteschaltung ausgestaltet ist, einen Zeitpunkt aus dem Differenzsignal (108) zu bestimmen, an dem der erste und der zweite Gegenstand (10, 12) eine vorbestimmte relative Position zueinander haben, vorzugsweise zur Festlegung eines Schaltpunktes.

**17.** Positionsdetektor nach einem der Ansprüche 14 bis 16,
**dadurch gekennzeichnet, dass**
der erste Teil der Auswerteschaltung derart ausgestaltet ist, dass die erste und die zweite Messgröße vor der Differenzbildung verstärkt werden, vorzugsweise unterschiedlich stark.

**18.** Positionsdetektor nach Anspruch 17,
**dadurch gekennzeichnet, dass**
die Messgröße, die der zur Bewegungsrichtung (18) im Wesentlichen senkrechten Magnetfeldkomponente entspricht, stärker verstärkt wird, als die Messgröße, die der zur Bewegungsrichtung im wesentlichen parallelen Magnetfeldkomponente entspricht.

**19.** Positionsdetektor nach einem der Ansprüche 14 bis 18,
**dadurch gekennzeichnet dass**
die Sensoranordnung wenigstens zwei Hallelemente umfasst, die derart zur relativen Bewegungsrichtung der Gegenstände angeordnet sind, dass ihre Messsignale sich bei einer relativen Bewegung der Gegenstände zueinander unterschiedlich ändern.

**20.** Positionsdetektor nach einem der Ansprüche 14 bis 18,
**dadurch gekennzeichnet, dass**
die Sensoranordnung (32) wenigstens zwei magnetoresistive Elemente (40, 42, 44, 46) umfasst, die derart zur relativen Bewegungsrichtung (18) der Gegenstände (10, 12) angeordnet sind, dass ihre Widerstandswerte sich bei einer relativen Bewegung der Gegenstände (10, 12) zueinander unterschiedlich ändern.

**21.** Positionsdetektor nach Anspruch 20,
**dadurch gekennzeichnet, dass**
die Auswerteschaltung die Signale der magnetoresistiven Elemente zur Bestimmung der ersten und der zweiten Magnetfeldkomponente verwendet und die erste und die zweite Magnetfeldkomponente als erste und zweite Messgröße verwendet.

**22.** Positionsdetektor nach Anspruch 20,
**dadurch gekennzeichnet, dass**
die Auswerteschaltung die Signale der magnetoresistiven Elemente als erste und zweite Messgröße verwendet.

**23.** Positionsdetektor nach Anspruch 20,
**dadurch gekennzeichnet, dass**
die Sensoranordnung (32) wenigstens vier magnetoresistive Elemente (40, 42, 44, 46) umfasst, die in einer Brückenschaltung miteinander verschaltet sind.

**24.** Positionsdetektor nach Anspruch 23,
**dadurch gekennzeichnet, dass**
die magnetoresistiven Elemente (40, 42, 44, 46) so gewählt sind, dass sie im magnetfeldfreien Fall gleiche Widerstandswerte aufweisen und in jedem Zweig der Brückenschaltung jeweils zwei magnetoresistive Elemente in Serie geschaltet sind, die derart angeordnet sind, dass sich ihre Widerstandswerte bei der relativen Bewegung (18) des ersten Gegenstandes (10) und des zweiten Gegenstandes (12) unterschiedlich ändern.

**25.** Positionsdetektor nach Anspruch 24,
**dadurch gekennzeichnet, dass**
der Signalabgriff an der Brückenschaltung derart ist, dass das von der Brückenschaltung entnommene Signal der Differenz der Beträge der Messgrößen entspricht, so dass die Brückenschaltung vom ersten Teil der Auswerteschaltung umfasst ist.

**26.** Positionsdetektor nach einem der Ansprüche 14 bis 25,

**dadurch gekennzeichnet, dass**
die Sensoranordnung (32) feldbeeinflussende Elemente (50), vorzugsweise aus weichmagnetischem Material, zur Verstärkung der Messgrößen umfasst.

27. Positionsdetektor nach einem der Ansprüche 14 bis 26,
**dadurch gekennzeichnet, dass**
die Elemente (40, 42, 44, 46, 50, 52) der Sensoranordnung auf einem ein Sensorelement bildenden gemeinsamen Chip (31) angeordnet sind.

28. Positionsdetektor nach einem der Ansprüche 14 bis 27,
**dadurch gekennzeichnet, dass**
der erste und der zweite Gegenstand einen Zylinder (12) und einen Kolben (10) umfassen, wobei vorzugsweise der Kolben den ersten Gegenstand mit dem magnetfelderzeugenden Element (14) und der Zylinder den zweiten Gegenstand mit der Sensoranordnung (32) bilden.

29. Positionsdetektor nach einem der Ansprüche 14 bis 28,
**dadurch gekennzeichnet, dass**
das magnetfelderzeugende magnetische Element einen Ringmagnet (14) umfasst.

30. Positionsdetektor nach den Ansprüchen 28 und 29,
**dadurch gekennzeichnet, dass**
der Ringmagnet (14) in einer am Umfang des Kolbens (10) angeordneten Nut vorgesehen ist.


**Claims**

1. A method for the determination of the relative position of two articles in which

    - a magnetic field is generated with the aid of a magnetic element of a first article and
    - a first and a second measurement value are determined with the aid of a sensor arrangement of a second article, with the first and the second measurement values being correlated with the size of the magnetic field in two different spatial directions and thus corresponding to two different magnetic field components,

    wherein the sensor arrangement is so selected that the first magnetic field component is essentially parallel to the relative direction of movement of the articles and the second magnetic field component is essentially perpendicular to the relative direction of movement of the articles
    **characterized in that**
    a difference signal (108) of the absolute magnitudes of the first and second measured values (100, 102) is used in order to determine the relative position of the first and second articles (10, 12).

2. A method in accordance with claim 1,
**characterized in that**
a point in time is determined from the difference signal (108) at which the first article (10) and the second article (12) have a predetermined relative position to one another, preferably in order to determine a switching point.

3. A method in accordance with claim 2,
**characterized in that**,
the position of an extremum of the difference signal (108) is used to determine the point in time.

4. A method in accordance with any one of the claims 1 to 3,
**characterized in that**
the first and the second measured values are enhanced prior to the difference formation, preferably by different amounts.

5. A method in accordance with claim 4,
**characterized in that**
the measured value which corresponds to the magnetic field component essentially perpendicular to the direction of movement is enhanced more strongly than the measured value which corresponds to the magnetic field component essentially parallel to the direction of movement.

**6.** A method in accordance with any one of the claims 1 to 5,
**characterized in that**
measurement signals of at least two Hall elements are used as the measured values with the Hall elements being arranged in the sensor arrangement so that their measurement signals change differently on a movement of the articles relative to one another.

**7.** A method in accordance with any one of the claims 1 to 5,
**characterized in that**
resistance values of at least two magneto-resistive elements are used for the determination of the measured values, with the magneto-resistive elements being arranged in the sensor arrangement in such a manner that their resistance values change differently on a movement of the articles relative to one another.

**8.** A method in accordance with claim 7,
**characterized in that**
the signals of the magneto-resistive elements are used for the determination of the first and second magnetic field components and the absolute magnitudes of the first and second magnetic field components are used for the difference formation.

**9.** A method in accordance with claim 7,
**characterized in that**
the absolute magnitudes of the signals of the magneto-resistive elements are used for the difference formation.

**10.** A method in accordance with claim 7,
**characterized in that**
at least four magneto-resistive elements (40, 42, 44, 46) are used which are connected to one another in the form of a bridge circuit in such a way and are arranged relative to one another in the sensor arrangement (32) in such a way that the signal taken from the bridge circuit corresponds to the difference of the magnitude of a first measured value corresponding to the first magnetic field component and of the magnitude of a second measured value corresponding to the second magnetic field component and this difference signal (108) is used for the determination of the relative position of the first article (10) and the second article (12).

**11.** A method in accordance with any one of the claims 7 to 10,
**characterized in that**
the magnetic flux is enhanced with the aid of field influencing elements (50), preferably of soft magnetic material, at the magnetoresistive elements (40, 42, 44, 46).

**12.** A method in accordance with any one of the claims 1 to 11,
**characterized in that**
the first and the second articles include a cylinder (10) and a piston (12).

**13.** A method in accordance with claim 12,
**characterized in that**
the piston (10) is equipped with the magnetic field generating magnetic element (14) and the cylinder (12) with the sensor arrangement (32).

**14.** A position detector for detecting the relative position of two articles moved relative to one another for carrying out a method in accordance with claim 1, having

- a magnetic field generating magnetic element provided at a first article, and
- a sensor arrangement provided at a second article for the determination of a first measured value and a second measured value, with the first and the second measured values correlating with the size of the magnetic field in two different spatial directions and thus corresponding to two different magnetic field components, wherein the sensor arrangement (32) is so arranged that the first magnetic field component is essentially parallel to the relative direction of movement (18) and the second magnetic field component (18) is essentially perpendicular to the relative direction of movement (18),

characterzed by
an evaluation circuit having a first part for the formation of a difference signal (108) of the absolute magnitudes of the first and second measured values (100, 102).

**15.** A position detector in accordance with claim 14,
**characterized in that**
the evaluation circuit includes a second part for the determination of a relative position of the first and second articles (10, 12) from the difference signal (108).

**16.** A position detector in accordance with claim 15,
**characterized in that**
the second part of the evaluation circuit is adapted to determine a point in time from the difference signal (108) at which the first article (10) and the second article (12) have a predetermined relative position to one another, preferably for the determination of a switching point.

**17.** A position detector in accordance with any one of the claims 14 to 16,
**characterized in that**
the first part of the evaluation circuit is designed in such a way that the first measured value and the second measured value are enhanced prior to the difference formation, preferably by different amounts.

**18.** A position detector in accordance with claim 17,
**characterized in that**
the measured value which corresponds to the magnetic field component substantially perpendicular to the direction of movement (18) is more strongly amplified than the measured value which corresponds to the magnetic field component essentially parallel to the direction of movement.

**19.** A position detector in accordance with any one of the claims 14 to 20,
**characterized in that**
the sensor arrangement includes at least two Hall elements which are arranged in such a way to the relative direction of movement of the articles that their measurement signals change differently on a movement of the articles relative to one another.

**20.** A position detector in accordance with any one of the claims 14 to 18,
**characterized in that**
the sensor arrangement (32) includes at least two magneto-resistive elements (40, 42, 44, 46) which are so arranged to the relative direction (18) of movement of the articles (10, 12) that their resistance values change differently on a movement of the articles (10, 12) relative to one another.

**21.** A position detector in accordance with claim 20,
**characterized in that**
the evaluation circuit uses the signals of the magneto-resistive elements for the determination of the first and second magnetic field components and uses the first and second magnetic field components as the first and second measured values.

**22.** A position detector in accordance with claim 20,
**characterized in that**
the evaluation circuit uses the signals of the magneto-resistive elements as the first and second measured values.

**23.** A position detector in accordance with claim 20,
**characterized in that**
the sensor arrangement (32) includes at least four magneto-resistive elements (40, 42, 44, 46) which are connected to one another in a bridge circuit.

**24.** A position detector in accordance with claim 23,
**characterized in that**
the magneto-resistive elements (40, 42, 44, 46) are so selected that they have the same resistance values in the magnetic field free case and in each case two magneto-resistive elements are connected in series in each branch of the bridge circuit and are arranged such that their resistance values change differently on the relative movement (18) of the first article (10) and of the second article (12).

25. A position detector in accordance with claim 24,
**characterized in that**
the signal tap at the bridge circuit is such that the signal taken from the bridge circuit corresponds to the difference of the magnitudes of the measured values so that the bridge circuit is included in the first part of the evaluation circuit.

26. A position detector in accordance withany one of the claims 14 to 25,
**characterized in that**
the sensor arrangement (32) includes field influencing elements (50), preferably of soft magnetic material for the enhancement of the measured values.

27. A position detector in accordance with one of the claims 14 to 26,
**characterized in that**
the elements (40, 42, 44, 46, 50, 52) of the sensor arrangement are arranged on a common chip (31) forming a sensor element.

28. A position detector in accordance with any one of the claims 14 to 27,
**characterized in that**
the first article and the second article include a cylinder (12) and a piston (10), with the piston preferably forming the first article with the magnetic field generating element (14) and the cylinder forming the second article with the sensor arrangement (32).

29. A position detector in accordance with any one of the claims 14 to 28,
**characterized in that**
the magnetic field generating magnetic element includes a ring magnet (14).

30. A position detector in accordance with the claims 28 and 29,
**characterized in that**
the ring magnet (14) is provided in a groove arranged at the periphery of the piston (10).


**Revendications**

1. Procédé pour déterminer la position relative de deux objets déplacés l'un par rapport à l'autre, dans lequel

- à l'aide d'un élément magnétique d'un premier objet on engendre un champ magnétique, et
- à l'aide d'un agencement détecteur d'un second objet on détermine une première et une seconde grandeur de mesure, telles que la première et la seconde grandeur de mesure sont en corrélation avec l'intensité du champ magnétique dans deux directions différentes dans l'espace et correspondent à cet égard à deux composantes différentes du champ magnétique, dans lequel l'agencement détecteur est choisi de telle façon que la première composante du champ magnétique est essentiellement parallèle à la direction de mouvement relative des objets et la seconde composante du champ magnétique est essentiellement perpendiculaire à la direction de déplacement relative des objets,

**caractérisé en ce que**
lors de la détermination de la position relative du premier et du second objet (10, 12) on utilise un signal de différence (108) des valeurs absolues de la première et de la seconde grandeur de mesure (100, 102).

2. Procédé selon la revendication 1,
**caractérisé en ce que** l'on détermine à partir du signal de différence (108) un instant auquel le premier et le second objet (10, 12) ont une position prédéterminée l'un par rapport à l'autre, de préférence pour déterminer un point de commutation.

3. Procédé selon la revendication 2,
**caractérisé en ce que** pour déterminer l'instant on utilise la position d'une valeur extrême du signal de différence (108).

**4.** Procédé selon l'une des revendications 1 à 3,
**caractérisé en ce que** la première et la seconde grandeur de mesure sont amplifiées avant de former la différence, de préférence avec des amplifications différentes.

**5.** Procédé selon la revendication 4,
**caractérisé en ce que** la grandeur de mesure qui correspond à la composante du champ magnétique essentiellement perpendiculaire à la direction de déplacement est amplifiée plus fortement que la grandeur de mesure qui correspond à la composante du champ magnétique essentiellement parallèle à la direction de déplacement.

**6.** Procédé selon l'une des revendications 1 à 5,
**caractérisé en ce que** l'on emploie comme grandeur de mesure des signaux de mesure d'au moins deux éléments de Hall, qui sont agencés dans l'agencement de capteur de telle façon que leurs signaux de mesure varient de manière différente lors d'un mouvement relatif des objets l'un par rapport à l'autre.

**7.** Procédé selon l'une des revendications 1 à 5,
**caractérisé en ce que** pour déterminer les grandeurs de mesure, on emploie des valeurs de résistance d'au moins deux éléments magnétorésistifs qui sont agencés dans l'agencement de capteur de telle façon que leur valeur de résistance varie différemment l'une par rapport à l'autre lors d'un mouvement relatif des objets.

**8.** Procédé selon la revendication 7,
**caractérisé en ce que** les signaux des éléments magnétorésistifs sont utilisés pour déterminer la première et la seconde composante du champ magnétique et sont employés pour former la différence des valeurs absolues de la première et de la seconde composante du champ magnétique.

**9.** Procédé selon la revendication 7,
**caractérisé en ce que** les valeurs absolues des signaux des éléments magnétorésistifs sont utilisées pour former la différence.

**10.** Procédé selon la revendication 7,
**caractérisé en ce que** l'on utilise au moins quatre éléments magnétorésistifs (40, 42, 46, 44), qui sont connectés les uns aux autres sous la forme d'un circuit en pont, et qui sont agencés dans l'agencement de capteur (32) les uns par rapport aux autres de telle façon que le signal prélevé par le circuit en pont correspond à la différence de la valeur d'une première grandeur de mesure correspondant à la première composante du champ magnétique et d'une seconde grandeur correspondant à la seconde composante du champ magnétique, et ce signal de différence (108) est utilisé pour déterminer la position relative du premier et du second objet (10, 12).

**11.** Procédé selon l'une des revendications 7 à 10,
**caractérisé en ce que** le flux magnétique est amplifié à l'aide d'éléments influençant le champ magnétique (50), de préférence en matériau magnétique doux, dans les éléments magnétorésistifs (40, 42, 44, 46).

**12.** Procédé selon l'une des revendications 1 à 11,
**caractérisé en ce que** le premier et le second objet comprennent un cylindre (10) et un piston (12).

**13.** Procédé selon la revendication 12,
**caractérisé en ce que** le piston (10) est équipé de l'élément magnétique produisant un champ magnétique (14) et le cylindre (12) est équipé de l'agencement capteur (32).

**14.** Détecteur de position pour déterminer la position relative de deux objets déplacés l'un par rapport à l'autre, pour mettre en oeuvre un procédé selon la revendication 1, comprenant

- un élément magnétique, prévu sur un premier objet, produisant un champ magnétique, et
- un agencement capteur prévu sur un second objet pour déterminer une première et une seconde grandeur de mesure, la première et la seconde grandeur de mesure étant en corrélation avec l'intensité du champ magnétique dans deux directions différentes dans l'espace et correspondant à cet égard à deux composantes de champ magnétique différente, et

dans lequel l'agencement capteur (32) est agencé de telle façon que la première composante de champ magnétique est essentiellement parallèle à la direction du mouvement relatif (18) et la seconde composante du champ magnétique est essentiellement perpendiculaire à la direction de déplacement relatif (18),
**caractérisé par**
un circuit d'évaluation avec une première partie pour former un signal de différence (108) des valeurs absolues de la première et de la seconde grandeur de mesure (100, 102).

15. Détecteur de position selon la revendication 14,
**caractérisé en ce que** le circuit d'évaluation comprend une seconde partie pour déterminer une position relative du premier et du second objet (10, 12) à partir du signal de différence. (108).

16. Détecteur de position selon la revendication 15,
**caractérisé en ce que** la seconde partie du circuit d'évaluation est conçue pour déterminer à partir du signal de différence (108) un instant auquel le premier et le second objet (10, 12) occupent une position relative prédéterminée l'un par rapport à l'autre, de préférence pour déterminer un point de commutation.

17. Détecteur de position selon l'une des revendications 14 à 16, **caractérisé en ce que** la première partie du circuit d'évaluation est conçue de telle façon que la première et la seconde grandeur de mesure sont amplifiées avant de former la différence, de préférence avec des amplifications différentes.

18. Détecteur de position selon la revendication 17,
**caractérisé en ce que** la grandeur de mesure qui correspond à la composante du champ magnétique essentiellement perpendiculaire à la direction de déplacement (18) est amplifiée plus fortement que la grandeur de mesure qui correspond à la composante du champ magnétique essentiellement parallèle à la direction de déplacement.

19. Détecteur de position selon l'une des revendications 14 à 18,
**caractérisé en ce que** l'agencement capteur comprend au moins deux éléments de Hall, qui sont agencés par rapport à la direction de déplacement des objets de telle façon que leurs signaux de mesure varient différemment lors d'un mouvement relatif des objets l'un par rapport à l'autre.

20. Détecteur de position selon l'une des revendications 14 à 18,
**caractérisé en ce que** l'agencement capteur (32) comprend au moins deux éléments magnétorésistifs (40, 42, 44, 46) qui sont agencés par rapport à la direction de déplacement (18) des objets (10, 12) de telle façon que leur valeur de résistance varie différemment lors d'un mouvement relatif des objets (10, 12) l'un par rapport à l'autre.

21. Détecteur de position selon la revendication 20,
**caractérisé en ce que** le circuit d'évaluation utilise les signaux des éléments magnétorésistifs pour la détermination de la première et de la seconde composante du champ magnétique et utilise la première et la seconde composante du champ magnétique à titre de première et de seconde grandeur de mesure.

22. Détecteur de position selon la revendication 20,
**caractérisé en ce que** le circuit d'évaluation utilise les signaux des éléments magnétorésistifs à titre de première et de seconde grandeur de mesure.

23. Détecteur de position selon la revendication 20,
**caractérisé en ce que** l'agencement capteur (32) comprend au moins quatre éléments magnétorésistifs (40, 42, 44, 46), qui sont connectés les uns aux autres dans un circuit en pont.

24. Détecteur de position selon la revendication 23,
**caractérisé en ce que** les éléments magnétorésistifs (40, 42, 44, 46) sont ainsi choisis qu'ils présentent dans une situation en absence de champ magnétique les mêmes valeurs de résistance, et dans chaque branche du circuit en pont, deux éléments magnétiques sont branchés respectivement en série, lesquels sont agencés de telle façon que leur valeur de résistance varie différemment lors du mouvement relatif (18) du premier objet (10) et du second objet (12).

25. Détecteur de position selon la revendication 24,
**caractérisé en ce que** le palpeur de signal sur le circuit en pont est tel que le signal prélevé par le circuit en pont correspond à la différence des valeurs des grandeurs de mesure, de sorte que le circuit en pont est inclus dans la première partie du circuit d'évaluation.

26. Détecteur de position selon l'une des revendications 14 à 25,
**caractérisé en ce que** l'agencement capteur (32) comprend des éléments influençant le champ magnétique (50), de préférence en matériau magnétique doux, pour amplifier les grandeurs de mesure.

27. Détecteur de position selon l'une des revendications 14 à 26,
**caractérisé en ce que** les éléments (40, 42, 44, 46, 50, 52) de l'agencement capteur sont agencés sur une puce commune (31) formant un élément capteur.

28. Détecteur de position selon l'une des revendications 14 à 27,
**caractérisé en ce que** le premier et le second objet comprennent un cylindre (12) et un piston (10), le piston formant de préférence le premier objet avec l'élément produisant un champ magnétique (14) et le cylindre formant le second objet avec l'agencement capteur (32).

29. Détecteur de position selon l'une des revendications 14 à 28,
**caractérisé en ce que** l'élément magnétique engendrant le champ magnétique comprend un aimant annulaire (14).

30. Détecteur de position selon les revendications 28 et 29,
**caractérisé en ce que** l'aimant annulaire (14) est prévu dans une gorge ménagée à la périphérie du piston (10).

Figur 1

Figur 2

EP 1 847 810 B1

U⁺  72

40  44

76

OUT⁺

OUT⁻

78

42  46

74

Figur 3

*a)*

*b)*

*c)*

Figur 4

20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19712829 A1
- EP 0726448 A
- EP 0979988 A
- DE 102004060249 A1
- US 20040160220 A1
- US 4490674 A
- US 20020171418 A1
- WO 9946565 A